# EUROPÄISCHE PATENTANMELDUNG

(11) **EP 0 675 327 A2**
(43) Veröffentlichungstag der Anmeldung: **04.10.1995**
(21) Anmeldenummer: 95100889.5
(22) Anmeldetag: 24.01.1995
(51) Int. Cl.: F24D 11/00

(54) **Warmwasserspeicher**

(30) Priorität: 31.03.1994 DE 4411352
(71) Anmelder: Solar Diamant-System Gesellschaft für Herstellung und Vertrieb von energiesparenden Heizsystemen mbH, D-48493 Wettringen (DE)
(72) Erfinder: Terbrack, Erich, Dipl.-Ing., D-48493 Wettringen (DE)
(74) Vertreter: Schulze Horn, Stefan, Dipl.-Ing. M.Sc.

(57) **Zusammenfassung**

Die Erfindung betrifft einen Warmwasserspeicher mit einem Behälter (8), in dessen oberem Abschnitt A ein geschlossener Brauchwasserbehälter (22) befestigt ist, mit mindestens einer Zuleitung für in einer Solaranlage erwärmbares Wasser im unteren Abschnitt B des Behälters (8), mit mindestens je einer Brauchwasserzuleitung und -ableitung (1, 3, 4), die dichtend durch den Behälter (8) in den Brauchwasserbehälter (22) führen, und mit mindestens je einer Heizungswasserzuleitung und -ableitung (6, 7, 9, 10, 11, 15, 16, 17), die dichtend in das Innere des Behälters (8) führen.

Der neue Warmwasserspeicher ist dadurch gekennzeichnet, daß der Brauchwasserbehälter (22) die Form eines koaxial im Behälter (8) beabstandet angeordneten Hohlrings aufweist und daß das in der Solaranlage erwärmbare Wasser in den unteren Abschnitt eines koaxial im Behälter (8) angeordneten Rohres (19) einleitbar ist, wobei sich das Rohr (19) beabstandet durch den etwa zylindrischen Innenraum des Brauchwasserbehälters (22) bis nahe an einen oberen Deckel des Behälters (8) erstreckt und das oben und unten mindestens eine Öffnung und in seiner Mantelfläche mehrere, in Längsrichtung beabstandete Öffnungen (20) aufweist, die zumindest teilweise im Bereich des Innenraumes des Brauchwasserbehälters (22) liegen und die zumindest teilweise mit je einem Rückschlagventil versehen sind.

## Beschreibung

Die vorliegende Erfindung betrifft einen Warmwasserspeicher nach dem Oberbegriff des Patentanspruchs 1.

Ein derartiger Warmwasserspeicher ist aus der DE 42 04 329 A1 bekannt. Der Warmwasserspeicher ist ohne zusätzliche Regler und Steuerungen bedienbar. In dem Warmwasserspeicher ist ein Trennblech mit Öffnungen vorgesehen, das seinerseits aus der DD 282 507 A5 oder der DE 34 23 331 C2 bekannt ist und das bewirkt, daß eine sich im Behälter einstellende Temperaturschichtung trotz diese sonst störender Strömungen aufrechterhalten bleibt. Wenn sich auch dieser bekannte Warmwasserspeicher durchaus bewährt hat, so bleibt doch als Nachteil, daß zusätzliche Wärmequellen zur Erwärmung des Brauchwassers nötig sind.

Es ist auch ein Warmwasserspeicher, insbesondere für Brauchwasser, aus der DE 43 01 723 A1 bekannt. Dieser Warmwasserspeicher hat keine getrennte Bereiche für Brauchwasser und Heizungswasser. Er weist ein Mittelrohr auf, das unten wenigstens eine Einströmöffnung und in seinem Mantel in unterschiedlichen Höhenlagen eine Anzahl von Ausströmöffnungen aufweist, wobei eine untere Rohrwendel für ein erstes Heizmedium beabstandet im unteren Teil des Mittelrohres angeordnet ist und wobei das erste Heizmedium vorzugsweise durch Solarenergie erwärmbar ist. Weiter weist dieser Warmwasserspeicher eine zweite Rohrwendel auf, die konventionell beheizbar ist. Außerdem ist zumindest ein Teil der Ausströmöffnungen in dem Mittelrohr mit je einem Rückschlagventil versehen.

Nachteilig bei dem letztgenannten bekannten Warmwasserspeicher ist, daß er keine getrennten Speicherräume für Brauchwasser, das Trinkwasserqualität aufweist, und Heizungswasser hat, das durch den Umlauf in Heizkörpern verunreinigt ist.

Es ist die Aufgabe der vorliegenden Erfindung, einen bekannten Warmwasserspeicher gemäß DE-OS 42 04 329 derart weiterzuentwickeln, daß das Brauchwasser in hohem Maße durch Solarenergie erwärmbar ist und daß konventionelle Energie, z.B. aus mit fossilen Brennstoffen beheizten Anlagen nur in geringem Maße nötig ist.

Die Aufgabe wird gelöst durch einen Warmwasserspeicher mit den Merkmalen des Patentanspruchs 1.

Mit dem erfindungsgemäßen Warmwasserspeicher wird erreicht, daß das durch die Solaranlage erwärmte Wasser im wesentlichen durch die Öffnungen im Bereich des Hohlrings austritt und diesen vorrangig erwärmt. Dies führt zu einem weit höheren Anteil der Solarenergie an der Brauchwassererwärmung, da der untere Abschnitt B, der zu Heizzwecken benutzt wird, nicht unnötig aufgeheizt werden muß. Dieser letztgenannte Bereich erhält also erst dann Energie, wenn der Brauchwasserbehälter genügend erwärmt ist. Ein weiterer Vorteil liegt darin, daß der Solarwärmetauscher kleiner dimensioniert werden kann, da er sich länger in einem kalten Umfeld befindet und somit die Wärme aufgrund des großen Temperaturgefälles auf einer kürzeren Strecke abgegeben werden kann.

Um den Wirkungsgrad des Warmwasserspeichers zu steigern ist vorgesehen, daß beabstandet unterhalb des Brauchwasserbehälters im Behälter etwa waagerecht ein mit Öffnungen versehenes Trennblech angebracht ist, das den Abschnitt A von dem Abschnitt B trennt.

Um das in der Solaranlage erwärmbare Wasser in einem separaten Kreislauf optimal aufheizen zu können, ist im unteren Abschnitt des koaxial im Behälter angeordneten Rohres beabstandet eine von dem in der Solaranlage erwärmbaren Wasser durchstörmbare Rohrwendel mit je einer Zu- und Ableitung für das in der Solaranlage erwärmbare Wasser angeordnet.

Zweckmäßig ist weiterhin vorgesehen, daß die jeweils mindestens eine Brauchwasserzuleitung und -ableitung durch den oberen Deckel des Behälters geführt sind.

Weiter sind je eine Heizungswasserzuleitung und -ableitung für eine Boilerheizung seitlich im Bereich des oberen Abschnitts A in der Wand des Behälters angeordnet. Dieser kleinere Nebenkreislauf dient zur Beheizung von Brauchwasser in an sich bekannten Boilern, wobei die Boiler einen Wärmetauscher aufweisen, so daß das Heizungswasser nicht in Berührung mit dem sauberen Brauchwasser kommt. In an sich bekannter Weise kann dieser kleine Nebenkreislauf vorrangig vor dem Heizungskreislauf geschaltet werden, so daß zunächst ein Boiler oder auch mehrere Boiler beheizbar sind.

Zweckmäßig ist vorgesehen, daß je eine Heizungswasserzuleitung und -ableitung für eine Raumheizung im unteren Abschnitt B seitlich in der Wand des Behälters angeordnet sind. Dieser Heizungskreislauf kann in an sich bekannter Weise im Bedarfsfalle durch eine konventionelle Feuerung nachgeheizt werden.

Weiter ist vorgesehen, daß in einer Ausgestaltung je eine Heizungswasserzuleitung und -ableitung für eine Wärmepumpe im unteren Abschnitt B seitlich in der Wand des Behälters angeordnet sind. Dadurch kann in an sich bekannter Weise durch eine Wärmepumpe zusätzliche Heizenergie dem Warmwasserspeicher zugeführt werden.

In einer weiteren Ausgestaltung ist vorgesehen, daß eine Heizungswasserzuleitung für einen in einem Kamin oder Kachelofen angeordneten Wärmetauscher im oberen Abschnitt A seitlich und eine zugehörige Ableitung im unteren Abschnitt B des Behälters angeordnet sind. Dadurch wird erreicht, daß in einem Kamin oder Kachelofen erwärmtes Brauchwasser ebenfalls zur Heizung des Warmwasserspeichers herangezogen werden kann, wobei eine an sich bekannte Schaltung dafür sorgt, daß erst bei Erreichen einer Grenztemperatur, beispielsweise 60°C, dieser Kreislauf betrieben wird. Dadurch gelangt relativ warmes Wasser in die Nähe des Brauchwasserbehälters und erwärmt diesen.

Zur weiteren zusätzlichen Beheizung des Warmwasserspeichers kann ein Elektroheizstab im unteren Abschnitt des Behälters angeordnet sein. Auch dieser Elektroheizstab ist nur bei Bedarf zuschaltbar.

Zur besseren Wärmeübertragung sind zweckmäßig die Wände des Brauchwasserbehälters oberflächenvergrößernd gewellt.

Um gute Strömungsverhältnisse zu erzielen, weist das Rohr in seinem unteren, die Rohrwendel aufnehmenden Abschnitt einen größeren Durchmesser auf als in dem oberen Abschnitt.

Um Wartungsfreiheit und eine lange Lebensdauer zu erreichen und Hygieneprobleme zu vermeiden, ist der Brauchwasserbehälter aus nicht rostendem Stahl gefertigt.

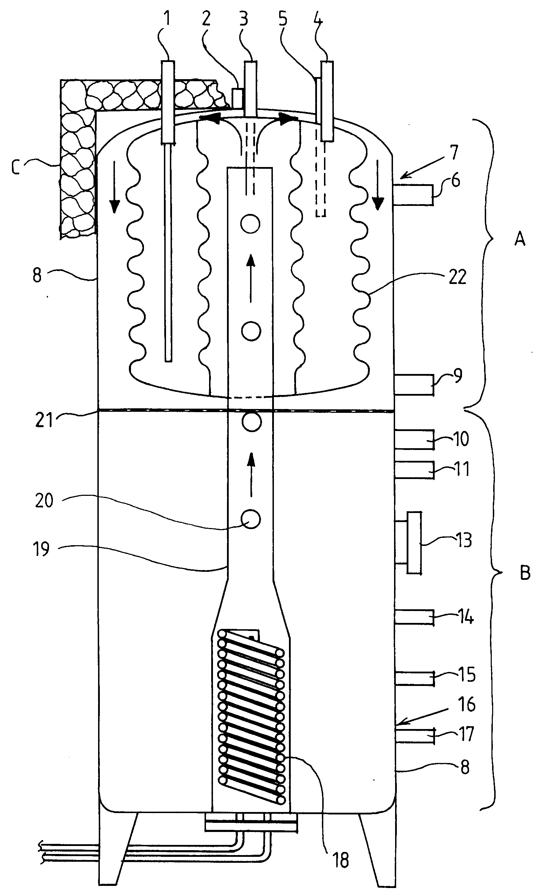

Ein Ausführungsbeispiel der Erfindung wird nunmehr anhand einer Zeichnung näher erläutert. Sie zeigt in einer einzigen Figur einen vereinfachten Längsschnitt durch einen Warmwasserspeicher.

In der Figur ist ein auf Füßen aufgestellter allgemein zylindrischer Behälter 8 dargestellt, der während des Betriebes vollständig mit Wasser gefüllt ist.

Dieser Behälter 8 ist durch ein Trennblech 21 in einen oberen Abschnitt A und einen unteren Abschnitt B unterteilt, wobei das Trennblech 21 beabstandet unterhalb eines Brauchwasserbehälters 22 im Behälter 8 angeschweißt ist und Durchtrittsöffnungen für das im Behälter 8 befindliche Wasser aufweist.

Der Brauchwasserbehälter 22 hat allgemein die Form eines Hohlrings mit gewellten Seitenwänden. Er ist rundum beabstandet in dem 8 Behälter angeordnet und gegenüber dem Heizungswasser im Behälter dicht, so daß kein Übertritt zwischen dem Heizungswasser und dem in dem Brauchwasserbehälter 22 befindlichen Brauchwasser, das Trinkwasserqualität aufweist, möglich ist.

In den Brauchwasserbehälter 22 sind von oben durch den Deckel des Behälters 8 eine Zuleitung 1 für kaltes Brauchwasser und eine Ableitung 4 für warmes Brauchwasser geführt. Außerdem ragt ein Zirkulationsanschluß 3 für Brauchwasser in an sich bekannter Weise von oben in den Brauchwasserbehälter 22. Weiter weist der Deckel des Behälters 8 eine Entlüftung 2 auf, die in bekannter Weise nur zum Entlüften des Behälters 8 zu öffnen ist. In den Brauchwasserbehälter 22 ragt weiter von oben durch den Deckel des Behälters 8 eine Temperaturmeßsonde 5. Seitlich am Behälter 8, in der Figur auf der rechten Seite, ist im Abschnitt A oben eine Ableitung 6 zur Boilerbeheizung angebracht und weiter unten eine Zuleitung 9 von der Boilerbeheizung.

Im Abschnitt B unterhalb des Trennblechs 21 ist eine Ableitung zur Raumheizung 10 vorgesehen; eine zugehörige Zuleitung 17 von der Raumheizung befindet sich weiter unten im Abschnitt B. Unterhalb der Ableitung 10 befindet sich im Abschnitt B seitlich eine Zuleitung 11 von einer Wärmepumpe; eine zugehörige Ableitung 15 zur Wärmepumpe befindet sich weiter unten oberhalb der Zuleitung 17.

Weiter ist seitlich ein Elektroheizstab 13 und darunter eine Temperaturmeßsonde 14 für den Heizungwasserbereich im Abschnitt B eingesetzt.

Ein Rohr 19 erstreckt sich etwa vom Bereich des Bodens des Behälters 8 senkrecht koaxial nach oben bis nahe an den Deckel des Behälters 8. Das Rohr 19 ist in seinem unteren Abschnitt, der eine Rohrwendel 18 aufnimmt, weiter als in seinem oberen Abschnitt. Die Rohrwendel 18 ist von einem Fluid durchströmt, welches in bekannter Weise in einer Solaranlage erwärmbar ist. Das Fluid ist üblicherweise Wasser.

In dem oberen engeren Abschnitt des Rohres 19 sind in Längsrichtung beabstandet mehrere Öffnungen 20 angebracht, wobei auch jeweils auf einer Ebene mehrere Öffnungen 20 in Umfangsrichtung beabstandet angebracht sein können. Diese Öffnungen weisen nicht gezeigte Rückschlagventile, sogenannte Flatterventile auf, wie sie aus der DE 43 01 723 A1 bekannt sind.

Weiter sind seitlich am Behälter 8, in der Figur nicht sichtbar, auf Höhe der Ableitung 6 eine Zuleitung 7 von einem Kamin oder Kachelofen mit Wasserheizeinsatz angebracht, wobei unten im Abschnitt B, ebenfalls nicht sichtbar, auf Höhe der Zuleitung 17 eine Ableitung 16 zum Kamin oder Kachelofen angeordnet ist.

Der Behälter 8 ist zur Vermeidung von Wärmeverlusten von einer nur teilweise dargestellten Isolierung C umgeben, die z.B. aus 100 mm dickem, FCKW-freien Weichschaumstoff besteht.

## Patentansprüche

1. Warmwasserspeicher mit einem wärmeisolierten, geschlossenen, aufrechtstehenden, allgemein zylindrischen Behälter (8), in dessen oberem Abschnitt A ein geschlossener Brauchwasserbehälter (22) beabstandet von den Innenwänden des Behälters (8) befestigt ist, mit mindestens einer Zuleitung für in einer Solaranlage erwärmbares Wasser im unteren Abschnitt B des Behälters (8), mit mindestens je einer Brauchwasserzuleitung und -ableitung (1, 3, 4) und einer Temperaturmeßsonde (5), die dichtend durch den Behälter (8) in den Brauchwasserbehälter (22) führen, und mit mindestens je einer Heizungswasserzuleitung und -ableitung (6, 7, 9, 10, 11, 15, 16, 17) und mindestens einer Temperaturmeßsonde (14), die dichtend in das Innere des Behälters (8) führen,
**dadurch gekennzeichnet,**
daß der Brauchwasserbehälter (22) die Form eines koaxial im Behälter (8) beabstandet angeordneten Hohlrings aufweist und daß das in der Solaranlage erwärmbare Wasser in dem unteren Abschnitt eines koaxial im Behälter (8) angeordneten Rohres (19) einleitbar ist, wobei sich das Rohr (19) beabstandet durch den etwa zylindrischen Innenraum des Brauchwasserbehälters (22) bis nahe an einen oberen Deckel des Behälters (8) erstreckt und oben und unten mindestens eine Öffnung und in seiner Mantelfläche mehrere, in Längsrichtung beabstandete Öffnungen (20) aufweist, die zumindest teilweise im Bereich des Innenraums des Brauchwasserbehälters (22) liegen und die zumindest teilweise mit je einem Rückschlagventil versehen sind.

2. Warmwasserspeicher nach Anspruch 1, dadurch gekennzeichnet, daß beabstandet unterhalb des Brauchwasserbehälters (22) im Behälter (8) etwa waagerecht ein mit Öffnungen versehenes Trennblech (21) angebracht ist, das den Abschnitt A von dem Abschnitt B trennt.

3. Warmwasserspeicher nach Anspruch 1 oder 2, dadurch gekennzeichnet, daß im unteren Abschnitt des koaxial im Behälter (8) angeordneten Rohres (19) beabstandet eine von dem in der Solaranlage erwärmbaren Wasser durchströmbare Rohrwendel (18) mit je einer Zu- und Ableitung für das in der Solaranlage erwärmbare Wasser angeordnet ist.

4. Warmwasserspeicher nach einem der vorangehenden Ansprüche, dadurch gekennzeichnet, daß die jeweils mindestens eine Brauchwasserzuleitung und -ableitung (1, 3, 4) durch den oberen Deckel des Behälters (8) geführt sind.

5. Warmwasserspeicher nach einem der vorangegangenen Ansprüche, dadurch gekennzeichnet, daß je eine Heizungswasserzuleitung und -ableitung (6, 9) für eine Boilerheizung seitlich im Bereich des oberen Abschnittes A in der Wand des Behälters (8) angeordnet sind.

6. Warmwasserspeicher nach einem der vorangegangenen Ansprüche, dadurch gekennzeichnet, daß je eine Heizungswasserzuleitung und -ableitung (10, 17) für eine Raumheizung im unteren Abschnitt B seitlich in der Wand des Behälters (8) angeordnet sind.

7. Warmwasserspeicher nach einem der vorangegangenen Ansprüche, dadurch gekennzeichnet, daß je eine Heizungswasserzuleitung und -ableitung (11, 15) für eine Wärmepumpe im unteren Abschnitt B seitlich in der Wand des Behälters (8) angeordnet sind.

8. Warmwasserspeicher nach einem der vorangegangenen Ansprüche, dadurch gekennzeichnet, daß eine Heizungswasser-Zuleitung (7) für einen in einem Kamin oder Kachelofen angeordneten Wärmetauscher seitlich im oberen Abschnitt A und eine zugehörige Ableitung (16) seitlich im unteren Abschnitt B des Behälters (8) angeordnet sind.

9. Warmwasserspeicher nach einem der vorangegangenen Ansprüche, dadurch gekennzeichnet, daß im unteren Abschnitt B des Behälters (8) ein Elektroheizstab (13) angeordnet ist.

10. Warmwasserspeicher nach einem der vorangegangenen Ansprüche, dadurch gekennzeichnet, daß die Wände des Brauchwasserbehälters (22) oberflächenvergrößernd gewellt sind.

11. Warmwasserspeicher nach einem der Ansprüche 3 bis 10, dadurch gekennzeichnet, daß das Rohr (19) in seinem unteren, die Rohrwendel (18) aufnehmenden Abschnitt einen größeren Durchmesser aufweist als in seinem oberen Abschnitt.

12. Warmwasserspeicher nach einem der vorangegangenen Ansprüche, dadurch gekennzeichnet, daß der Brauchwasserbehälter (22) aus nichtrostendem Stahl gefertigt ist.
